# EUROPÄISCHE PATENTSCHRIFT

(11) **EP 2 053 280 B1**
(45) Veröffentlichungstag und Bekanntmachung des Hinweises auf die Patenterteilung: **26.01.2011**
(21) Anmeldenummer: 07119124.1
(22) Anmeldetag: 23.10.2007
(51) Int. Cl.: F16H 61/28

(54) **Verfahren zum Erreichen einer Neutralstellung einer Schaltgabel in einem Schaltgetriebe**
Method for attaining a neutral position of a shift fork in a gearbox
Procédé destiné à atteindre une position neutre d'une fourchette de commande dans une boîte de vitesse

(43) Veröffentlichungstag der Anmeldung: 29.04.2009
(73) Patentinhaber: Getrag Ford Transmissions GmbH, 50735 Köln (DE)
(72) Erfinder: Leibbrandt, Martin, 50181 Bedburg (DE); Bosch, Helmuth, 51379 Leverkusen (DE); Hüpkes, Stefan, 41748 Viersen (DE)

(56) Entgegenhaltungen:
- EP-A- 0 949 430
- EP-A- 1 300 614
- EP-A- 1 564 448
- DE-A1- 10 025 907
- DE-A1- 19 650 450
- DE-C1- 10 224 062

## Beschreibung

Die Erfindung betrifft ein Verfahren zum Erreichen einer zwischen zwei Endlagen liegenden Neutralstellung einer Schaltgabel in einem Schaltgetriebe eines Kraftfahrzeuges.

Aus der gattungsgemäßen EP 1 300 614 A2 ist ein Verfahren zum Auffinden einer Neutralstellung einer Schaltgabel bekannt. Die Schaltgabel ist dabei zwischen zwei Endlagen in zwei Richtungen bewegbar. Befindet sich die Schaltgabel in einer der Endlagen, so ist ein Gang des Schaltgetriebes eingelegt. Zum Einlegen eines Ganges durchläuft, ausgehend von der Neutralstellung, die Schaltgabel einen dem jeweiligen Gang zugeordneten Synchronisationspunkt, wodurch die Drehzahl einer Eingangswelle des Schaltgetriebes mit der Drehzahl einer Ausgangswelle synchronisiert wird. Nach Überschreiten des Synchronisationspunkts erfolgt eine formschlüssige Verbindung zwischen einem dem jeweiligen Gang zugeordneten Losrad und der Welle (Eingangswelle oder Ausgangswelle), auf dem das Losrad sitzt. Durch den Formschluss zwischen Losrad und entsprechender Welle ist der Gang eingelegt.

Bei der EP 1 300 614 A2 wirkt auf die Schaltgabel bzw. auf eine Schaltstange, die Teil der Schaltgabel ist, eine Rastkraft, die die Schaltgabel in Richtung Neutralstellung drückt und in einer weiter von der Neutralstellung entfernten Position die Schaltgabel von der Neutralstellung wegdrückt. Das in der EP 1 300 614 A2 beschriebene Verfahren konzentriert sich auf das Auffinden der Neutralstellung, wenn sich die Schaltgabel bereits in der Nähe der Neutralstellung befindet, in der die Rastkraft die Schaltgabel in Richtung Neutralstellung drückt. Zum Auffinden dieser ungefähren Neutralstellung schlägt die EP 1 300 614 A2 vor, die zwei Endlagen der Schaltgabel bzw. die zwei Endlagen einer durch die Schaltgabel geführte Schiebemuffe zu ermitteln und über eine Mittelung des Abstands zwischen den Endlagen die üblicherweise mittig zwischen den Endlagen angeordnete Neutralstellung zu ermitteln. Dafür bedarf es aber wenigstens eines Sensors für die Position oder die Positionsänderung der Schaltgabel.

Bei Ausfall des Sensors für die Positionsbestimmung kann das Verfahren der EP 1 300 614 A2 nicht mehr durchgeführt werden. Es ist nicht mehr möglich, zuverlässig die Neutralstellung aufzufinden. Der Erfindung liegt daher die Aufgabe zugrunde, ein Verfahren bereitzustellen, das mit möglichst einfachen Mitteln zuverlässig das Auffinden der Neutralstellung ermöglicht.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Das Verfahren gemäß Anspruch 1 umfasst zwei Schritte. Zunächst wird in einem Schritt S1 die Schaltgabel mit einer Kraft F₁ in eine Richtung der beiden möglichen Richtungen beaufschlagt, wobei die Kraft F₁ größer ist als die maximale Rastkraft. In einem Schritt S2 wird der Schritt S1 bzw. die Beaufschlagung der Schaltgabel mit der Kraft F₁ anhand wenigstens eines der folgenden Abbruchkriterien beendet:
a) eine bestimmte Zeitdauer Δt₁ wird überschritten;
b) es stellt sich im Schritt S1 eine starke Änderung der Drehzahl der Eingangswelle im Verhältnis zur Drehzahl der Ausgangswelle ein;
c) Eingangswelle und Ausgangswelle laufen nicht mehr synchron.

Das erfindungsgemäße Verfahren kommt ohne Sensor zur Positionsbestimmung der Schaltgabel aus. Dies bedeutet, dass bei Ausfall eines Positionssensors im Schaltgetriebe die Neutralstellung zuverlässig aufgefunden werden kann.

Wie oben bereits erwähnt, wirkt die Rastkraft in Abhängigkeit der Position der Schaltgabel in unterschiedliche Richtungen. In der Nähe der Neutralstellung ist eine Rastierung vorgesehen, durch die die Schaltgabel in Richtung Neutralstellung gedrückt wird. Die Rastierung umfasst dabei vorzugsweise eine Rastkurve und einen Rastkörper beispielsweise in Form einer federbelasteten Kugel oder Rolle, wobei die Rastkurve vorzugsweise so ausgelegt ist, dass die Rastkraft in der Neutralstellung betraglich ein Maximum annimmt.

Bei der Rastierung wird der Rastkörper mit einer gewissen Kraft gegen die Rastkurve gedrückt. Die Rastkraft ist dabei die Kraft, die aufgrund des Zusammenspiels von Rastkörper und Rastkurve in Bewegungsrichtung der Schaltgabel auf Letztgenannte wirkt.

In einem bevorzugten Ausführungsbeispiel startet das Verfahren aus einer Anfangsposition, bei der ein Gang des Schaltgetriebes eingelegt ist. Dem Schritt S1 geht dabei ein Schritt S0 voraus. In dem Schritt S0 wird eine Kupplung des Kraftfahrzeugs geöffnet, wodurch das Schaltgetriebe oder der Getriebezweig des Schaltgetriebes, dem der eingelegte Gang zugeordnet ist, von einem Antrieb des Kraftfahrzeugs getrennt wird. Des Weiteren wird im Schritt S0 festgelegt, dass die Kraft F₁ in Richtung Neutralstellung wirkt. Ob ein Gang und welcher Gang eingelegt ist, kann durch die Erfassung der Drehzahlen von Eingangswelle und Ausgangswelle ermittelt werden. Weisen die Drehzahlen (über eine bestimmte Zeit) ein konstantes Verhältnis auf, kann bei Kenntnis des Übersetzungsverhältnisses eines jeden Ganges im Schaltgetriebe der eingelegte Gang sicher identifiziert werden. Ist der eingelegte Gang bekannt, so kann auch eindeutig die Richtung festgelegt werden, in die sich die Schaltgabel bewegen muss, um von dem eingelegten Gang in die Neutralstellung zu kommen.

In einem bevorzugten Ausführungsbeispiel wird im Schritt 2 nur das Abbruchkriterium a) berücksichtigt. Die anderen Abbruchkriterien b) und c) werden dabei nicht überprüft. Gemäß Abbruchkriterium a) wird die Schaltgabel mit der Kraft F₁ nur für die Zeitdauer Δt₁ beaufschlagt. Die Zeitdauer Δt₁ ist dabei vorzugsweise so zu bemessen, dass die Schaltgabel ausgehend vom eingelegten Gang in einen Bereich gedrückt wird, in dem die Rastkraft die Schaltgabel bereits in Richtung Neutralstellung drückt. Ist die Rastkraft größer als die zu überwindende Reibkraft, gelangt somit die Schaltgabel aufgrund der Rastierung in die Neutralstellung.

Nach Schritt S2 kann die Schaltgabel in gleicher Richtung für eine Zeitdauer Δt₂ mit einer Kraft F₂ beaufschlagt werden, die kleiner als die maximale Rastkraft ist. Durch die Begrenzung der Kraft F₂ wird sichergestellt, dass die Schaltgabel ausgehend von dem eingelegten Gang nicht über die Neutralstellung hinaus bewegt wird. Dies gilt dann, wenn die Rastkraft in der Neutralstellung einen maximalen Wert annimmt, wobei einer Bewegung der Schaltgabel aus der Neutralstellung heraus die Rastkraft entgegen steht.

Alternativ kann nach Schritt S2 die Schaltgabel in gleicher Richtung für eine Zeitdauer Δt₃ mit einer Kraft F₃ beaufschlagt werden, die kleiner als die Kraft F₁, aber größer als die maximale Rastkraft ist. Die Zeitdauer Δt₃ ist dabei zu begrenzen. Die Zeitdauer Δt₃ ist kleiner als eine Zeit, die zur Synchronisierung der Drehzahlen von Eingangswelle und Ausgangswelle benötigt wird, und zwar für den Gang, der dem am Anfang des Verfahrens eingelegten Gang gegenüber liegt. Bei dieser Verfahrensvariante wird, soweit Reibkräfte nicht zu groß sind, wird bedingt durch die Kraft F₃ die Schaltgabel ausgehend von dem eingelegten Gang über die Neutralstellung hinaus bewegt und wird am Synchronisationspunkt des gegenüber liegenden Ganges aufgrund der dort beginnenden Synchronisation aufgehalten. Aufgrund der zeitlichen Begrenzung der Zeitdauer Δt₃ wird sichergestellt, dass sich die Schaltgabel über den Synchronisationspunkt des gegenüberliegenden Ganges nicht hinausbewegt, sondern, soweit die Rastkraft im Synchronisationspunkt in Richtung Neutralstellung gerichtet ist, durch die Rastkraft wieder zurück in die Neutralstellung gedrückt wird. In dieser Stelle sei darauf hingewiesen, dass die Rastkräfte im Bereich der Neutralstellung und im Bereich des Synchronisationspunktes deutlich größer sind als auftretende Reibkräfte, wobei jedoch zu bedenken ist, dass die Reibkräfte stark von der Temperatur im Getriebe abhängen können.

Zudem ist auch möglich, dass im Schritt S2 nur das Abbruchkriterium b) berücksichtigt wird. Dem liegt die Erkenntnis zugrunde, dass eine starke Änderung der Drehzahl der Eingangswelle im Verhältnis zur Drehzahl der Ausgangswelle dann stattfindet, wenn die Schaltgabel ausgehend vom eingelegten Gang über die Neutralstellung hinaus zum Synchronisationspunkt des gegenüberliegenden Ganges verfahren wurde und dort aufgrund der einsetzenden Synchronisation die Eingangswelle beschleunigt bzw. abgebremst wird. Entsprechend kann nach Schritt S2 die Schaltgabel in entgegengesetzter Richtung für eine gewisse Zeitdauer Δt₄ mit einer Kraft F₄ beaufschlagt werden, die kleiner als die maximale Rastkraft ist. Die Kraft F₄ ist dabei in Richtung Neutralstellung gerichtet. Die Begrenzung auf die maximale Rastkraft stellt sicher, dass die Kraft F₄ die Schaltgabel nicht über die Neutralstellung hinaus drückt, da das Maximum der Rastkraft in der Neutralstellung anliegen soll.

Alternativ kann nach Schritt S2 die Schaltgabel in entgegengesetzter Richtung für eine Zeitspanne Δt₅ mit einer Kraft F₅ beaufschlagt werden, die kleiner als die Kraft F₁ und größer als die maximal wirkende Rastkraft ist. Dabei wird die Kraft F₅ nach einer Zeitdauer Δt₅ abgeschaltet, die kleiner ist als die benötigte Zeit zur Synchronisierung der Drehzahlen von Eingangswelle und Ausgangswelle. Durch die zeitliche Begrenzung der Kraft F₅ wird sichergestellt, dass nach erfolgter Richtungsumkehr die Schaltgabel nicht zu lange an dem Synchronisationspunkt des zuvor ausgelegten Ganges anliegt. Auch hier führt bei entsprechend ausgelegter Rastierung die Rastkraft dazu, dass die Schaltgabel vom Synchronisationspunkt des ursprünglich eingelegten Ganges in die Neutralstellung rutscht.

Des Weiteren kann im Schritt S2 vorgesehen sein, dass nur das Abbruchkriterium c) berücksichtigt wird, bei dem überprüft wird, ob Eingangswelle und Ausgangswelle synchron laufen. Ist ein synchroner Lauf nicht mehr gegeben, weil durch fehlenden Formschluss zwischen Ausgangswelle und Eingangswelle die Drehzahl der Eingangswelle abfällt, wird nach Schritt S2 die Schaltgabel in gleicher Richtung mit einer Kraft F₆ für eine Zeitdauer Δt₆ beaufschlagt, wobei die Kraft F₆ kleiner als die maximale Rastkraft ist. Hier wird der Umstand genutzt, dass der nicht synchrone Lauf von Ausgangswelle und Eingangswelle ein Indiz dafür ist, dass der Gang nicht mehr eingelegt ist und sich deshalb entsprechend die Schaltgabel von der dem Gang zugeordneten Endlage bereits entfernt haben muss. Die Kraft F₆ reicht dabei aus, die Schaltgabel weiter in Richtung Neutralstellung zu bewegen.

Nach Ablauf der Zeitdauer Δt₆ kann für die Kraft F₆ eine Richtungsumkehr erfolgen, wobei nach erfolgter Richtungsumkehr die Kraft F₆ ebenfalls nur eine Zeitdauer Δt₆ wirkt. Diese Richtungsumkehr kann mehrmals erfolgen, wobei der Betrag der Kraft F₆ und/oder die Zeitdauer Δt₆ sukzessive verringert werden kann. Bei diesem Ausführungsbeispiel wird die Schaltgabel in der Nähe der Neutralstellung hin- und hergedrückt, bis letztlich das Verfahren endet und die Schaltgabel sich sicher in Neutralstellung befindet.

In einem bevorzugten Ausführungsbeispiel werden alle drei Abbruchkriterien abgeprüft und in Abhängigkeit des Kriteriums, das erfüllt ist, weitere Verfahrensschritte eingeleitet. Dabei kann vor dem Schritt S1 ein Schritt S0' erfolgen. Bei dem Schritt S0' wird zunächst ermittelt, ob ein Gang eingelegt ist, wobei bei erfolgreicher Identifikation eines eingelegten Ganges die Kraft F₁ in Richtung Neutralstellung wirkt, bei nicht erfolgreicher Identifikation die Kraft F₁ in Richtung höherer Gang wirkt und wobei dann die Kupplung des Kraftfahrzeugs geöffnet wird, wodurch das Getriebe oder ein Getriebezweig dem der identifizierte oder höhere Gang zugeordnet ist, vom Antrieb des Kraftfahrzeugs getrennt wird.

Nach den Schritten S0', S1 und S2 können nun weitere Schritte S3 und S4 folgen. Im Schritt S3 wird bei Eintritt des Abbruchkriteriums b) die Betätigungskraft F₁ abgeschaltet, während bei Eintritt des Abbruchkriteriums a) oder c) die Schaltgabel in gleicher Richtung mit einer Kraft F₇ beaufschlagt wird, die kleiner als die Kraft F₁ ist, wobei die Beaufschlagung durch die Kraft F₇ nach einer Zeitspanne Δt₇ endet oder dann endet, wenn sich eine starke Änderung der Drehzahl der Eingangswelle einstellt. Im Schritt S4 wird, soweit die Kraft F₇ nicht durch die starke Änderung der Drehzahl der Eingangswelle abgeschaltet wird, das Verfahren in umgekehrte Bewegungsrichtung der Schaltgabel mit den Schritten S1 bis S4 wiederholt, soweit die Drehzahlverhältnisse unverändert geblieben sind. Bei unveränderten Drehzahlverhältnissen ist wohl die Schaltgabel in Richtung eingelegter Gang gedrückt worden, so dass es zu keinem Auslegen des eingelegten Ganges gekommen ist. In diesem Fall war die gewählte Richtung der Kräfte F₁, F₇ falsch und wird in Schritt S4 umgekehrt.

In einem bevorzugten Ausführungsbeispiel kann die Verfahrgeschwindigkeit der Schaltstange begrenzt werden. Bei einem hydraulischen Aktuator für die Schaltstange kann dies beispielsweise durch eine Blende erfolgen, die nur einen bestimmten maximalen Volumenstrom zulässt. Bei einem elektrischen Aktuator kann eine maximale Spannung oder Betätigungsfrequenz vorgesehen sein.

Die Werte für die oben beschriebenen Zeitdauern, die Änderungen der Drehzahlen Wellen im Getriebe, weiterer möglicher Drehzahlkennzahlen, sowie die Werte für die Betätigungskräfte können in Abhängigkeit von der Temperatur und den (vermutlich) eingelegten Gängen unterschiedlich vorgegeben sein.

Anhand der in der Zeichnung dargestellten Ausführungsbeispiele wird die Erfindung näher erläutert. Es zeigen:
- Figur 1: schematisch eine Rastkurve und einen Rastkörper;
- Figur 2: einen Verlauf der Rastkraft über einen Schaltgabelweg;
- Figur 3: den zeitlichen Verlauf von Schaltgabelweg und Betätigungskraft eines ersten Ausführungsbeispiels;
- Figur 4: den zeitlichen Verlauf von Schaltgabelweg, Betätigungskraft und Drehzahl einer Eingangswelle eines zweiten Ausführungsbei- spiels;
- Figur 5: den zeitlichen Verlauf von Schaltgabelweg, Betätigungskraft und Drehzahl von Eingangswelle und Ausgangswelle in einem dritten Ausführungsbeispiel;
- Figur 6: ein Flussdiagramm eines vierten Ausführungsbeispiels;
- Figur 7: den zeitlichen Verlauf von Schaltgabelweg, Betätigungskraft und Drehzahl der Eingangswelle in einem fünften Ausführungs- beispiel;
- Figur 8: den zeitlichen Verlauf von Schaltgabelweg, Betätigungskraft und Drehzahl der Eingangswelle in einem sechsten Ausfüh- rungsbeispiel;
- Figur 9: den zeitlichen Verlauf von Schaltgabelweg, Betätigungskraft und Drehzahl der Eingangswelle in einem siebten Ausführungs- beispiel.

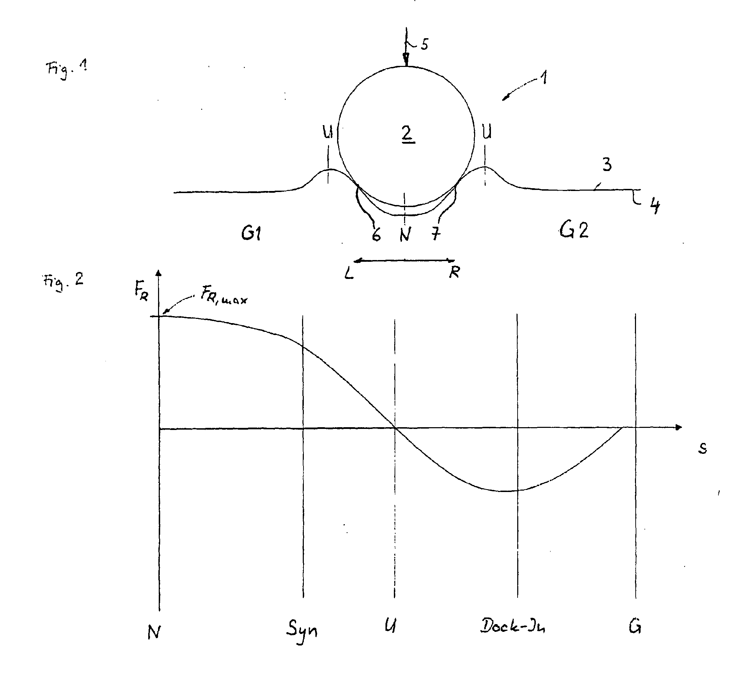

Figur 1 zeigt eine Rastierung 1, die einen Rastkörper 2 in Form einer Kugel und eine Rastkurve 3 umfasst. Die Rastkurve 3 ist dabei Teil einer Schaltgabel 4 als Teil eines Schaltgetriebes in einem Kraftfahrzeug. Insbesondere kann die Rastkurve 3 auf einer Mantelfläche einer Schaltstange vorgesehen sein, die Teil der Schaltgabel 4 sein soll und in zwei entgegengesetzten Richtungen L, R bezogen auf ein hier nicht dargestelltes Getriebe bewegbar angeordnet ist. Die Richtungen L, R sind in Figur 1 geradlinig, können aber auch kreisbogenförmig, also Folge einer Drehbewegung sein.

Der Rastkörper 2 wird mit einer Kraft gegen die Rastkurve 3 gedrückt, was durch den mit 5 gekennzeichneten Pfeil dargestellt sein soll. Die Kraft, die den Rastkörper 2 gegen die Rastkurve 3 drückt, kann beispielsweise eine Federkraft sein. Die Rastkurve 3 soll symmetrisch zu einer Neutralstellung N sein.

Wird nun die Schaltgabel 4 und somit die Rastkurve 3 in Richtung L oder in Richtung R verschoben, steht dem bedingt durch den federbelasteten Rastkörper 2 eine Rastkraft F_{R} entgegen. Der Verlauf der Rastkraft F_{R} über einen Schaltgabelweg s ist in Figur 2 für einen Bereich dargestellt, der von der Neutralstellung N bis zu einer der Endlagen der Schaltgabel reicht, in der ein Gang G eingelegt ist. In Figur 1 stehen sich zwei Gänge G1, G2 gegenüber.

Mit der Schaltstange 4 lässt sich eine Schiebemuffe entlang einer Welle bewegen, auf der axial beabstandet zwei Losräder sitzen. Jedes der Losräder weist eine Verzahnung auf, die mit einer Verzahnung der sich mit der Welle drehenden Schiebemuffe in Eingriff bringen lässt, wenn Losrad und Welle mit gleicher Drehzahl drehen. Der Gleichlauf von Welle und Losrad wird über eine Synchroneinheit bewerkstelligt. Jedes Losrad kann dabei einem Gang zugeordnet werden. Ist ein Gang eingelegt, so stehen die Verzahnungen von Schiebemuffe und entsprechendem Losrad in Eingriff.

In der Neutralstellung N, die der in Figur 1 dargestellten Stellung der Rastkurve 3 bezogen auf den Rastkörper 2 entspricht, weist die Rastkraft F_{R} ein Maximum auf, das durch F_{R}, mix gekennzeichnet ist. Diese Kraft F_{R}, ₘₐₓ hält die Schaltgabel 4 in der Neutralstellung N, soweit nicht größere Kräfte in einer der Richtungen L, R wirken. In Neutralstellung N liegt der Rastkörper 2 in zwei Punkten 6, 7 auf der Rastkurve 3 auf (Figur 1). Ansonsten stellt sich ein Einpunktkontakt zwischen Rastkörper 2 und Rastkurve 3 ein.

Wie der Figur 2 entnommen werden kann, ist die Rastkraft F_{R}, ausgehend von der Neutralstellung N, bis zu einem Umkehrpunkt U positiv. Dies bedeutet, dass der Bewegung der Schaltgabel 4 aus der Neutralstellung die Kraft F_{R} entgegensteht. Umgekehrt bewirkt die positive Rastkraft F_{R}, dass die Schaltgabel 4 in Richtung Neutralstellung gedrückt wird, wenn sie sich in dem Bereich zwischen Neutralstellung N und Umkehrpunkt U befindet.

Nach Überschreiten des Umkehrpunkten U ist die Rastkraft F_{R} negativ. Dies bedeutet, dass ab dem Umkehrpunkt U die Rastgabel von der Neutralstellung weg gedrückt wird. Der Umkehrpunkt U der Figur 2 korrespondiert dabei mit den in Figur 1 eingezeichneten Umkehrpunkten U an den lokalen Maxima der Rastkurve 3.

Die Bewegbarkeit der Schaltstange 4 wird durch die zwei Endlagen begrenzt, in denen jeweils einer der Gänge G1, G2 eingelegt ist. Wird die Schaltgabel 4 in Richtung L in die linke Endlage verschoben, so soll ein Gang G1 eingelegt werden. Entsprechend soll in entgegengesetzter Richtung R bei Erreichen der anderen Endlage ein gegenüberliegender Gang G2 eingelegt sein.

Bei Bewegung in Richtung eines Gang G wird zunächst ein Synchronisationspunkt Syn angefahren. In diesem Synchronisationspunkt wird die Drehzahl des Losrad des einzulegenden Ganges mit der Drehzahl der Welle synchronisiert. Nach erfolgter Synchronisation kommt es zu einem Formschluss zwischen den Verzahnungen der Schiebemuffe und des Losrades, was in Figur 2 mit Dock=In gekennzeichnet ist. Nach erfolgtem Eingriff der Zahnungen wird die Schaltstange 4 weiter bewegt, bis letztlich die Endlage erreicht wird, in der der Gang vollständig eingelegt ist.

Im Folgenden soll davon ausgegangen werden, dass die zwei Losräder aus einer Ausgangswelle des Getriebes sitzen und jeweils mit Festräder auf einer Eingangswelle des Getriebes kämmen. Um nun einen Formschluss zwischen Schiebemuffe und einem der Losräder zu erhalten, müssen folglich die Drehzahlen von Eingangswelle und Ausgangswelle synchronisiert werden.

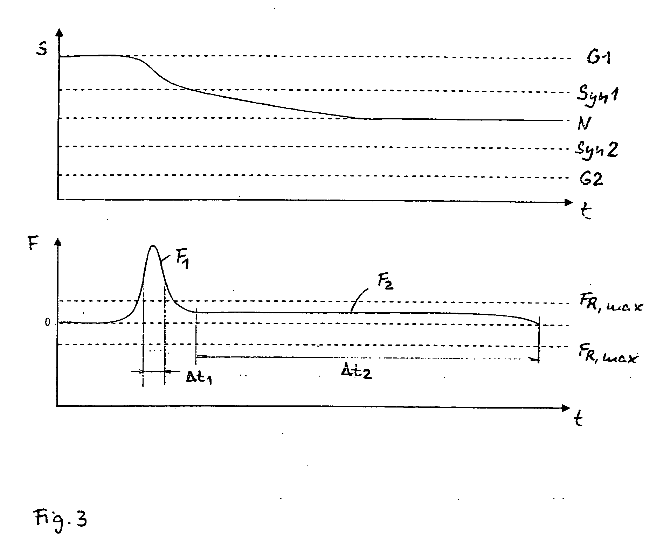

Anhand der Figuren 3 bis 9 werden Ausführungsbeispiele der Erfindung erläutert, wie die Schaltgabel 4 in eine gewünschte Position verschoben werden kann. Die Schaltgabel 4 wird dabei durch einen hier nicht dargestellten Aktuator bewegt, der eine Betätigungskraft F auf die Schaltgabel 4 ausübt. Der zeitliche Verlauf der Betätigungskraft F eines ersten Ausführungsbeispiels ist im unteren Teil der Figur 3 dargestellt. Ausgangspunkt des Verfahrens soll ein eingelegter Gang G1 (siehe oberer Teil der Figur 3) sein. Um nun von dem eingelegten Gang G1 in die Neutralstellung N zu kommen, wird für eine bestimmte Zeitdauer Δt₁ eine Kraft F₁ auf die Schaltgabel ausgeübt, die die Schaltgabel 4 in Richtung Neutralstellung N drückt. Das Beaufschlagen der Kraft F₁ führt dazu, dass die Schaltgabel einen dem Gang 1 zugeordneten Synchronisationspunkt Syn1 passiert. Danach wird die Schaltgabel mit einer Kraft F₂ beaufschlagt, die in die gleiche Richtung wirkt wie die Kraft F₁, jedoch kleiner ist als die maximale Rastkraft F_{R, max}. Auf die Schaltgabel 4 wirken nun zwei Kräfte, nämlich einerseits die Rastkraft F_{R} gemäß dem Verlauf der Figur 2 sowie die Betätigungskraft F₂. Diesen beiden Kräften wirken Reibkräfte entgegen. Die Summe aus Betätigungskraft F₂ und Rastkraft F_{R} sorgt dafür, dass die Schaltgabel in die Neutralstellung N geführt wird. Nach Ablauf der Zeitdauer Δt₂ wird die Betätigungskraft F₂ abgeschaltet. Hat die Schaltgabel die Neutralstellung N erreicht, und liegt der Rastkörper 2 in den Punkten 6, 7 auf der Rastkurve 3 auf, steht der weiteren Bewegung der Schaltgabel 4 in Richtung der Betätigungskraft F₂ nun die Rastkraft F_{R} entgegen, und zwar in Höhe der maximalen Rastkraft F_{R, max}. Da die Betätigungskraft F₂ kleiner ist als die maximale Rastkraft F_{R}, ₘₐₓ ist, wird die Schaltgabel über die Neutralstellung N nicht hinaus bewegt. Im oberen Teil der Figur 3 sind noch weitere, grundsätzlich erreichbare Positionen der Schaltstange 4 dargestellt. Es handelt sich um einen dem Gang G1 gegenüberliegenden Gang G2 und dessen Synchronisationspunkt Syn2. Diese beiden Positionen jedoch werden beim Verfahren gemäß Figur 3 nicht angefahren.

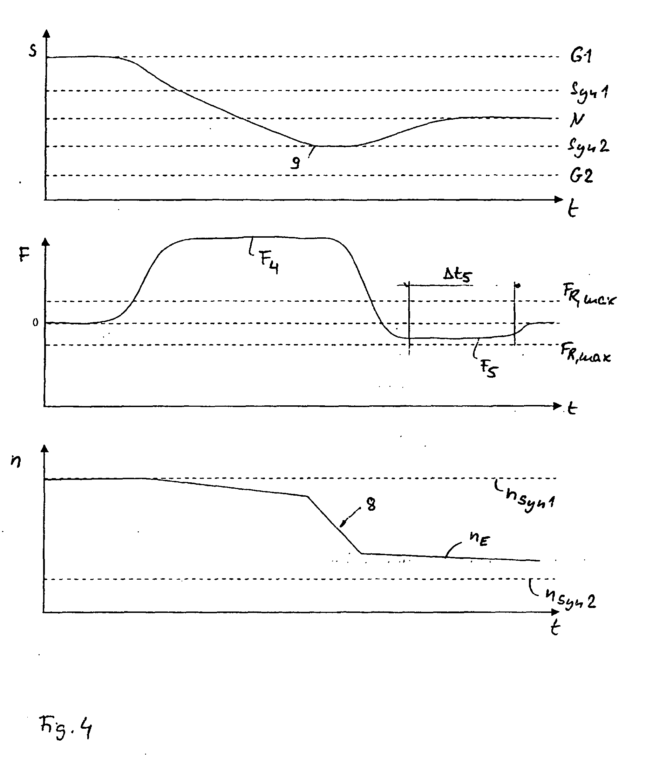

Das Verfahren gemäß Figur 4 geht ebenfalls von einem eingelegten Gang G1 aus. Dargestellt sind die zeitlichen Verläufe des Schaltstangenweges s, der Betätigungskraft F sowie der Drehzahl der Eingangswelle.

Um nun die Schaltgabel 4 in die Neutralstellung N zu drücken, wird die Schaltgabel in Richtung Neutralstellung N mit einer Betätigungskraft F₄ beaufschlagt, die größer als die maximale Rastkraft F_{R, max} ist. Das Abbruchkriterium für die Betätigungskraft F₄ ist das Überschreiten eines Grenzwertes für den Gradienten der Drehzahl n_{E} der Eingangswelle. Ein starker Abfall der Drehzahl n_{E} (gekennzeichnet durch das Bezugszeichen 8) stellt sich dann ein, wenn ausgehend vom Gang G1 der Synchronisationspunkt Syn2 des gegenüberliegenden Ganges G2 erreicht wird (siehe Punkt 9), wobei der Gang G2 gegenüber dem Gang G1 einen höheren Gang darstellt. Wie dem zeitlichen Verlauf des Schaltgabelweges s (oberer Teil der Figur 4) entnommen werden kann, durchläuft die Schaltgabel die Neutralstellung N und wird bis zu dem Synchronisationspunkt Syn2 geführt, in dem es aufgrund des Einsetzens der Synchronisation zum starken Abfall der Drehzahl n_{E} der Eingangswelle kommt. Nach Eintritt des entsprechenden Abbruchkriteriums wird die Schaltgabel in entgegengesetzter Richtung mit einer Betätigungskraft F₅ beaufschlagt, die kleiner als die maximale Rastkraft F_{R}, ₘₐₓ ist. Nach einer gewissen Zeitdauer Δt₅ wird die Betätigungskraft F₅ abgeschaltet. Bedingt durch die Betätigungskraft F₅ und die Rastkraft F_{R} wird die Schaltgabel sicher in die Neutralstellung N gedrückt.

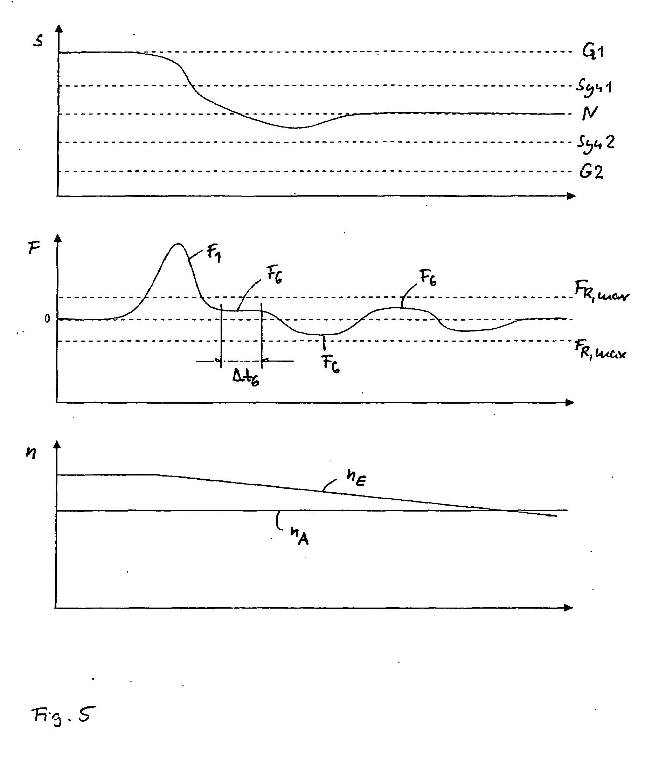

Die den Figur 4 ähnlichen Verläufe der Figur 5 verdeutlichen ein weiteres Ausführungsbeispiel. Auch hier ist Startpunkt ein eingelegter Gang G1. Die Schaltgabel 4 wird mit einer Kraft F₁ in Richtung Neutralstellung N gedrückt. Dadurch wird die formschlüssige Verbindung der Verzahnungen der Schiebemuffe und des Losrades geöffnet, so dass die Drehzahl n_{E} der Eingangswelle aufgrund Reibung leicht abfällt. Unterschreitet das Verhältnis der Drehzahlen von Eingangswelle und Ausgangswelle einen bestimmten Grenzwert, so wird die Betätigungskraft F₁ abgeschaltet und eine neue Betätigungskraft, die Betätigungskraft F₆, eingestellt. Die Betätigungskraft F₆ ist jedoch kleiner als die maximale Rastkraft F_{R}, marx Die Betätigungskraft F₆ sorgt dafür, dass die Schaltgabel weiter in Richtung Neutralstellung N bewegt wird. Aufgrund dynamischer Effekte kann es dazu kommen, dass die Schaltgabel über die Neutralstellung N hinaus bewegt wird, so wie dies im zeitlichen Verlauf des Schaltstangenweges dargestellt ist.

Nach Ablauf einer Zeitdauer Δt₆ wird die Betätigungskraft F₆ umgekehrt und wirkt ebenfalls für eine begrenzte Zeitdauer. Diese Kraftrichtungsumkehr erfolgt mehrere Male, so dass sicher die Neutralstellung N erreicht wird.

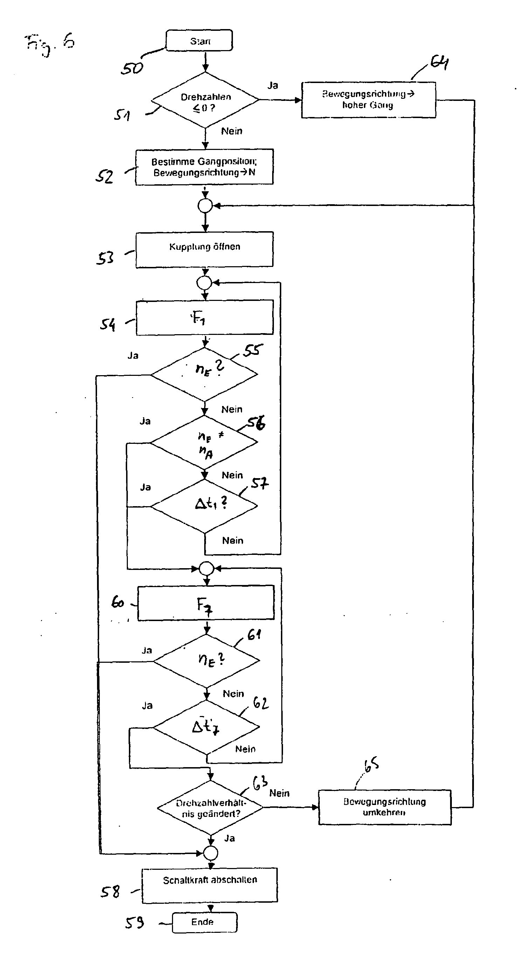

Figur 6 zeigt ein Ablaufdiagramm eines weiteren Ausführungsbeispiels. Nach einem Start 50 folgt eine Abfrage 51, ob sich die Eingangswelle und die Ausgangswelle drehen. Ist dies der Fall, kann aufgrund der Kenntnis des Übersetzungsverhältnisses eines jeden Ganges der Gang bestimmt werden, der momentan eingelegt ist. Dies erfolgt in dem mit 52 gekennzeichneten Schritt. Zudem wird die Bewegungsrichtung für die Schaltgabel festgelegt. Dem Schritt 52 folgt ein Schritt 53, in dem die Kupplung geöffnet wird, wodurch das Getriebe oder ein Getriebezweig, dem der eingelegte Gang zugeordnet ist, vom Antrieb des Kraftfahrzeugs getrennt wird. Danach wird die Schaltstange mit einer Kraft F₁, die größer als die maximale Rastkraft ist, verfahren (vgl. Schritt 54). Bei der Beaufschlagung mit der Kraft F₁ erfolgen kontinuierlich drei Abfragen 55 bis 57.

Bei Abfrage 55 wird überprüft, ob der Gradient der Drehzahl der Eingangswelle einen bestimmten Grenzwert überschreitet bzw. ob sich die Drehzahl der Eingangswelle einer Drehzahl nähert, die die Eingangswelle nach erfolgter Synchronisation mit dem gegenüberliegenden Gang einnehmen würde. Wird ein hoher Gradient der Drehzahl n_{E} festgestellt, so ist die Schaltstange ausgehend vom eingelegten Gang über die Neutralstellung N hinaus bewegt worden und befindet sich an dem Synchronisationspunkt des gegenüberliegenden Ganges. Die Schaltkraft F₁ wird dann in einem Schritt 58 abgeschaltet und das Verfahren endet (vgl. Schritt 59). Da sich die Schaltstange im Synchronisationspunkt des gegenüberliegenden Ganges befindet, wird die Schaltstange 4 gemäß dem Rastkraftverlauf der Figur 2 in Richtung Neutralstellung N gedrückt.

Wird in Abfrage 55 der eingestellte Grenzwert für den Gradienten der Drehzahl der Eingangswelle nicht überschritten, wird daraufhin in Abfrage 56 wird überprüft, ob die Eingangswelle noch synchron mit der Ausgangswelle läuft. Ist ein synchroner Lauf nicht mehr gegeben, so wird in einem Schritt 60 eine neue Betätigungskraft F₇ eingestellt, die kleiner ist als die maximale Rastkraft F_{R}, ₘₐₓ.

Zum Schritt 60 gelangt man auch, wenn eine voreingestellte Zeitdauer Δt₁, in der die Schaltstange mit der Kraft F₁ beaufschlagt wird, abgelaufen ist (vgl. Abfrage 57). Bei Beaufschlagung der Betätigungskraft F₇ wird mit Abfragen 61 und 62 überprüft, ob sich die Drehzahl n_{E} der Eingangswelle in einem gewissen Maße der Drehzahl nähert, welche sich bei erfolgter Synchronisation des gegenüberliegenden Ganges G2 einstellen würde. Ist dies der Fall, so ist die Schaltgabel über die Neutralstellung N hinaus bis zum gegenüberliegenden Synchronisationspunkt bewegt worden und die Betätigungskraft wird in Schritt 58 abgeschaltet.

Ist in Anfrage 62 die Zeitdauer Δt₇ abgelaufen, so wird in Abfrage 63 überprüft, ob sich das im Rahmen des Schrittes 52 zugrunde gelegte Drehzahlverhältnis von Eingangswelle und Ausgangswelle geändert hat. Ist dies der Fall, so wird ebenfalls die Betätigungskraft abgeschaltet (vgl. Schritte 58, 59).

Ist in Abfrage 51 die Ermittlung der Drehzahlen der Eingangswelle und Ausgangswelle nicht möglich und somit eine Bestimmung des eingelegten Ganges, wird eine Bewegungsrichtung der Schaltstange in Richtung des höheren Ganges festgelegt (Schritt 64). Mit dieser in Schritt 64 festgelegten Bewegungsrichtung wird das Verfahren beginnend mit dem Schritt 53 bis zum Ende 59 durchgeführt. Dabei kann der Fall auftreten, dass die gewählte Bewegungsrichtung der Schaltstange falsch war. So könnte die Schaltstange durch das Verfahren der Figur 6 in Richtung des bereits eingelegten Ganges gedrückt werden, ohne dass dabei Aussicht auf Erreichen der Neutralstellung N bestand. Abfrage 63 dient dazu, diesen Fall zu identifizieren und in Schritt 65 sicherzustellen, dass die Bewegungsrichtung der Schaltstange umgekehrt wird. Somit ist es dann möglich, nach Durchlauf der einzelnen Schritte 53 bis zum Ende 59 die Neutralstellung N zu erreichen.

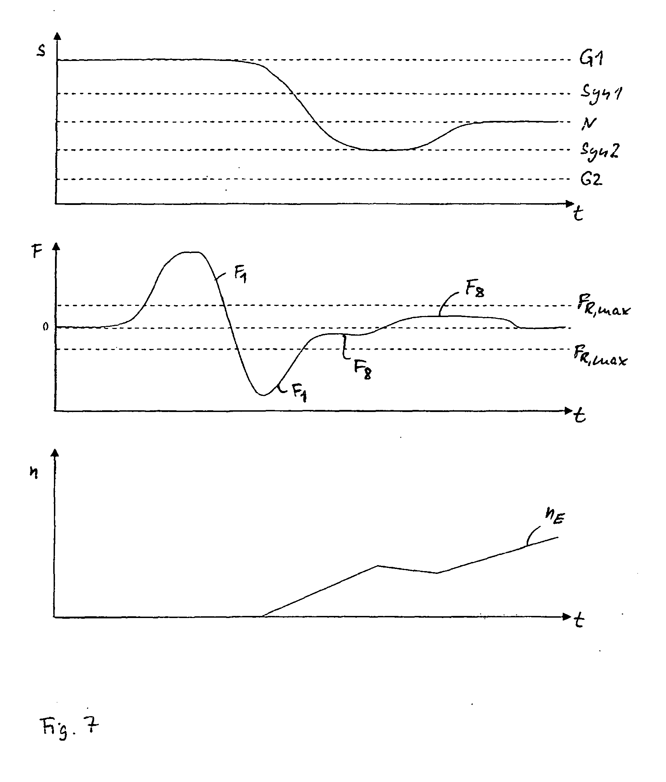

Das in Figur 7 dargestellte Ausführungsbeispiel stellt eine Methode dar, wie bei einem stehenden Kraftfahrzeug sicher die Neutralstellung N erreicht werden kann. Dazu wird die Kupplung bei aktivierter Fahrzeugbremse leicht geschlossen, so dass ein geringes Moment an der Eingangswelle anliegt. Die Schaltstange wird danach mit einer Kraft F₁ in eine der Richtungen L, R beaufschlagt. Wenn sich nach einer bestimmten Zeit keine Drehzahländerung der Eingangswelle ergibt, wird die Richtung der Kraft F₁ umgekehrt. In diesem Fall konnte die Eingangswelle keine Drehzahl aufnehmen, da durch den eingelegten Gang ein Formschluss mit der sich nicht drehenden Ausgangswelle gegeben ist. Da nun die Betätigungskraft F₁ umgekehrt wird und in die andere Richtung, d.h. nun in Richtung Neutralstellung N wirkt, wird der bisher eingelegte Gang ausgelegt, was zur Folge hat, dass nun aufgrund der immer noch leicht geschlossenen Kupplung die Eingangswelle sich immer schneller drehen kann. Wird eine Änderung der Drehzahl n_{E} der Eingangswelle erfasst, so wird die Kraft F₁ auf eine Kraft F₈ reduziert, die kleiner als die maximale Rastkraft F_{R}, ₘₐₓ ist. Wenn dabei, wie dies anhand des zeitlichen Verlaufs des Schaltstangenweges s zu erkennen ist, der gegenüberliegende Synchronisationspunkt Syn2 erreicht wird, wird die Kraft F₈ umgekehrt. Zu erkennen ist das Erreichen des Synchronisationspunktes Syn2 durch eine Abnahme der Drehzahl n_{E} der Eingangswelle. Schließlich kann nach einer gewissen Zeit die Kraft F₈ abgestellt werden, die so zu bemessen ist, dass bis dahin die Schaltstange die Neutralstellung N sicher erreicht hat.

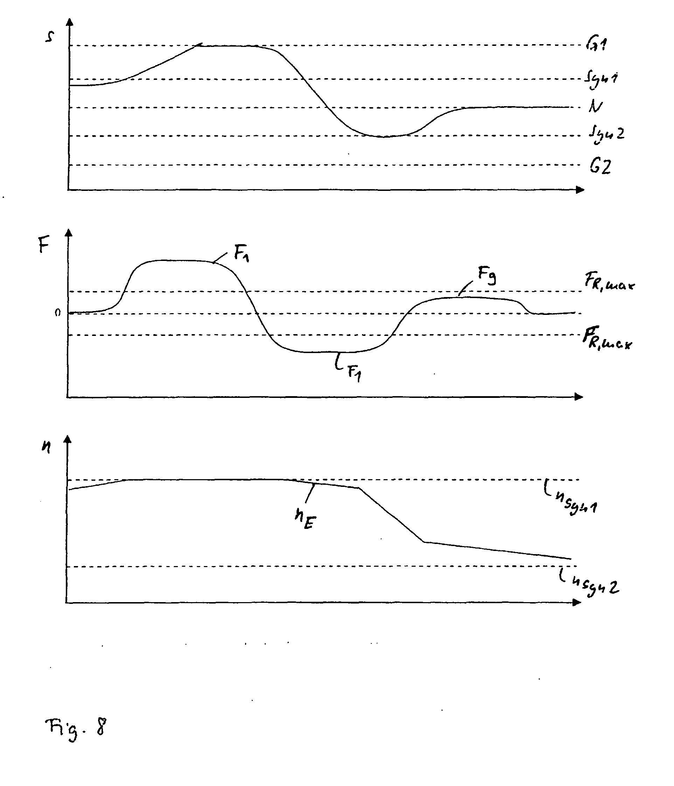

Im Gegensatz zu den oben beschriebenen Ausführungsbeispielen geht das Ausführungsbeispiel der Figur 8 von einem Fall aus, bei dem kein Gang eingelegt ist. Nach Öffnung der Kupplung wird die Schaltstange in eine beliebige Richtung mit einer Kraft F₁ verfahren, die größer als die maximale Rastkraft F_{R}, marx ist. Wenn sich das Verhältnis der Drehzahlen von Eingangswelle und Ausgangswelle schnell in Richtung Synchrondrehzahl n_{Syn1} des entsprechenden Ganges G1 nähert, wurde der Synchronisationspunkt Sny1 des Ganges G1 erreicht bzw. überschritten. Wenn sich nach einer gewissen Zeit immer noch die Eingangswelle mit der Synchrondrehzahl n_{syn1}, wird die Kraftrichtung umgekehrt, da dann die Schaltgabel in Richtung des bereits eingelegten Ganges gedrückt wurde. Stellt sich nun eine große Änderung der Drehzahl n_{E} der Eingangswelle in Richtung der Synchronisationsdrehzahl n_{syn2} des gegenüber liegenden Ganges ein, ist der Synchronisationspunkt Syn2 des entsprechenden Ganges erreicht worden. Danach wird die Schaltstange mit einer geringeren Kraft F₉ in entgegen gesetzter Richtung beaufschlagt, die kleiner als die maximale Rastkraft F_{R, max} ist. Somit gelangt man zuverlässig zur Neutralstellung N. Am Ende des Verfahrens fällt die Drehzahl n_{E} der Eingangswelle bei geöffneter Kupplung aufgrund Reibung weiter ab.

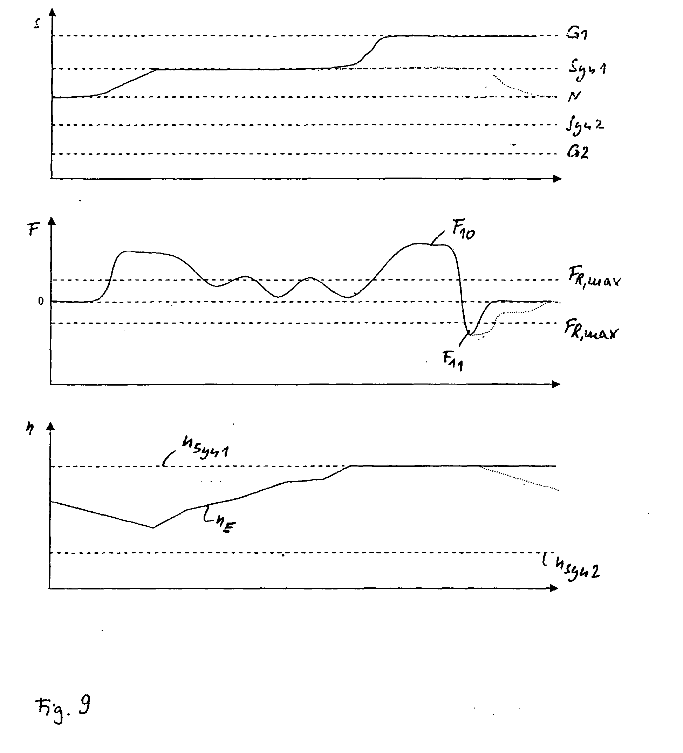

Figur 9 zeigt ein Verfahren, wie ausgehend von der Neutralstellung N ein Gang G1 eingelegt werden kann. Zunächst wird die Kupplung geöffnet, damit die Eingangswelle vom Antrieb getrennt ist. Es folgt dann ein geschwindigkeitsgesteuertes Anfahren des Synchronisationspunktes Syn1. Bei einem hydraulischen Aktuator wird dabei über eine Blende mit einem Druckregler ein bestimmter Volumenstrom eingestellt, der der gewünschten Geschwindigkeit entspricht. Wenn sich die Geschwindigkeit der Eingangswelle stark in Richtung Synchrondrehzahl n_{Sny1} ändert, wurde der Synchronisationspunkt Syn1 erreicht. Danach wird die Schaltstange druckgeregelt weiter verfahren, wobei die Regelgröße die Abweichung der Drehzahl n_{E} der Eingangswelle von der Synchrondrehzahl n_{syn1} ist.

Ist die Synchrondrehzahl n_{Syn1} erreicht, wird die Schaltstange mit einer Betätigungskraft F₁₀ beaufschlagt, was dazu dienen soll, die Endlage des Ganges G1 zu erreichen.

Nach Ablauf einer Wartezeit wird die Kupplung geschlossen, um Drehmoment zu übertragen. Danach wird die Schaltstange mit einer Betätigungskraft F₁₁ in Gegenrichtung beaufschlagt. Wurde der Gang G1 durchgeschaltet, so verhindert ein Hinterschnitt der Verzahnung des Losrads ein Auslegen des Ganges G1. Ist jedoch die Endlage des Ganges G1 nicht erreicht worden, so wird durch die Betätigungskraft F₁₁ der Synchronisationsvorgang abgebrochen und es entsteht eine Abweichung der Drehzahl n_{E} der Eingangswelle von der Synchronisationsdrehzahl n_{syn1}, so wie dies durch die gepunktete Linie im untersten Diagramm der Figur 9 dargestellt ist. Anhand der gepunkteten Linie beim zeitlichen Verlauf des Schaltgabelweges s erkennt man, dass die Schaltgabel bedingt durch die Rastierung in die Neutralstellung rutscht.

## Patentansprüche

1. Verfahren zum Erreichen einer zwischen zwei Endlagen liegenden Neutralstellung (N) einer Schaltgabel (4) in einem Schaltgetriebe eines Kraftfahrzeugs aus einer Ausgangsposition der Schaltgabel (4) heraus,
- wobei die Schaltgabel (4) zwischen den zwei Endlagen in zwei Richtungen (L, R) bewegbar ist,
- wobei in jeweils einer Endlage ein Gang (G1, G2) einlegbar ist,
- wobei zum Einlegen der Gänge (G1, G2) in einem dem jeweiligen Gang zugeordneten Synchronisationspunkt (Syn1, Syn2) die Drehzahl (n_{E}) einer Eingangswelle des Schaltgetriebes mit der Drehzahl (n_{E}) einer Ausgangswelle synchronisierbar ist, und
- wobei auf die Schaltgabel (4) eine Rastkraft (F_{R}) wirkt, die die Schaltgabel (4) in Richtung Neutralstellung (N) drückt und in der weiter von der Neutralstellung (N) entfernten Ausgangsposition die Schaltgabel (4) von der Neutralstellung (N) wegdrückt sowie vorzugsweise in der Nähe der Neutralstellung (N) ein Maximum (F_{R},ₘₐₓ) annimmt,
mit folgenden Schritten:
S1 Beaufschlagung der Schaltgabel (4) mit einer Betätigungskraft (F₁) in
Richtung einer der Richtung (L, R), wobei die Betätigungskraft (F₁) größer ist als die maximale Rastkraft (F_{R,max});
S2 Beenden des Schrittes S1 anhand wenigstens eines der folgenden Abbruchkriterien:
a) Eine bestimmte Zeitdauer Δt₁) wird überschritten;
b) Es stellt sich im Schritt S1 eine starke Änderung des Verhältnisses
der Drehzahl (n_{E}) der Eingangswelle zu Drehzahl (n_{A}) der Ausgangswelle ein;
c) Eingangswelle und Ausgangswelle laufen nicht mehr synchron.

2. Verfahren nach Anspruch 1, **dadurch gekennzeichnet, dass** das Verfahren aus einem eingelegten Gang (G1) startet und vor dem Schritt S1 folgenden Schritt umfasst:
S0 Öffnen einer Kupplung des Kraftfahrzeugs, wodurch das Getriebe oder
ein Getriebezweig, dem der eingelegte Gang (G1) zugeordnet ist, von einem Antrieb des Kraftfahrzeugs getrennt wird, und wobei festgelegt wird, dass die Betätigungskraft (F₁) in Richtung Neutralstellung (N) wirkt,

3. Verfahren nach Anspruch 2, **dadurch gekennzeichnet, dass** in Schritt S2 nur das Abbruchkriterium a) berücksichtigt wird.

4. Verfahren nach Anspruch 3, **dadurch gekennzeichnet, dass** nach Schritt S2 die Schaltgabel (4) in gleicher Richtung für eine Zeitdauer (Δt₂) mit einer Betätigungskraft (F₂) in gleicher Richtung beaufschlagt wird, die kleiner als die maximale Rastkraft (F_{R,max}) ist.

5. Verfahren nach Anspruch 3, **dadurch gekennzeichnet, dass** nach Schritt S2 die Schaltgabel (4) in gleicher Richtung für eine Zeitdauer (Δt₃) mit einer Betätigungskraft (F₃) beaufschlagt wird, die kleiner als die Betätigungskraft (F₁) und größer als die maximale Rastkraft (F_{R,max}) ist, wobei die Zeitdauer (Δt₃) kleiner als eine Zeit ist, die zur Synchronisierung der Drehzahlen (n_{E}, n_{A}) von Eingangswelle und Ausgangswelle benötigt wird.

6. Verfahren nach Anspruch 2, **dadurch gekennzeichnet, dass** in Schritt S2 nur das Abbruchkriterieum b) berücksichtigt wird.

7. Verfahren nach Anspruch 6, **dadurch gekennzeichnet, dass** nach Schritt S2 die Schaltgabel (4) in entgegen gesetzter Richtung für eine gewisse Zeitdauer (Δt₄) mit einer Betätigungskraft (F₄) beaufschlagt wird, die kleiner als die maximale Rastkraft (F_{R},ₘₐₓ) ist.

8. Verfahren nach Anspruch 7, **dadurch gekennzeichnet, dass**, nach Schritt S2 die Schaltgabel (4) in entgegen gesetzter Richtung für eine Zeitspanne (Δt₅) mit einer Betätigungskraft (F₅) beaufschlagt wird, die kleiner als die Betätigungskraft (F₁) und größer als die maximale Rastkraft (F_{R,max}) ist, wobei die Beaufschlagung durch die Betätigungskraft (F₅) nach einer Zeitdauer (Δt₅) endet, die kleiner ist als die benötigte Zeit zur Synchronisierung der Drehzahlen (n_{E}, n_{A}) von Eingangswelle und Ausgangswelle.

9. Verfahren nach Anspruch 2, **dadurch gekennzeichnet, dass** in Schritt S2 nur das Abbruchkriterium c) berücksichtigt wird und dass nach Schritt S2 die Schaltgabel (4) in gleicher Richtung mit einer Betätigungskraft (F₆) für eine Zeitdauer (At₆) beaufschlagt wird, wobei die Betätigungskraft (F₆) kleiner als die maximale Rastkraft (F_{R,max}) ist.

10. Verfahren nach Anspruch 9, **dadurch gekennzeichnet, dass** nach Ablauf der Zeitdauer (Δt₆) für die Betätigungskraft (F₆) wenigstens eine Richtungsumkehr erfolgt, wobei nach erfolgter Richtungsumkehr die Betätigungskraft (F₆) ebenfalls nur eine Zeitdauer (Δt₆) wirkt.

11. Verfahren nach Anspruch 1, **dadurch gekennzeichnet, dass** alle drei Abbruchkriterien geprüft werden, und in Abhängigkeit des Kriteriums, das erfüllt ist, unterschiedliche Verfahrenschritte eingeleitet werden.

12. Verfahren nach Anspruch 11, **dadurch gekennzeichnet, dass** vor dem Schritt S1 folgender Schritt erfolgt:
S0' Identifiktion, ob ein Gang (G1, G2) eingelegt ist, wobei bei erfolgreicher
Identifikation die Betätigungskraft (F₁) in Richtung Neutralstellung (N) wirkt, bei nicht erfolgreicher Identifikation die Betätigungskraft (F₁) in Richtung höherer Gang wirkt und wobei die Kupplung des Kraftfahrzeugs geöffnet wird, wodurch das Getriebe oder ein Getriebezweig, dem der identifizierte oder höhere Gang zugeordnet ist, vom Antrieb getrennt wird.

13. Verfahren nach Anspruch 12, **dadurch gekennzeichnet, dass** dem Schritt S2 folgende Schritte folgen:
S3 bei Eintritt des Abbruchkriteriums b) die Betätigungskraft (F₁) abgeschaltet wird, und dass bei Eintritt des Abbruchkriteriums a) oder c) die Schaltgabel (4) in gleicher Richtung mit einer Betätigungskraft (F₇) beaufschlagt wird, die kleiner als die Betätigungskraft (F₁) ist, wobei die Beaufschlagung durch die Betätigungskraft (F₇) nach einer Zeitspanne (Δt₇) abgeschaltet wird oder dann endet, wenn sich eine starke Änderung der Drehzahl (n_{E}) der Eingangswelle einstellt;
S4 bei starker Änderung der Drehzahl (n_{E}) der Eingangswelle die Betätigungskraft (F₇) abgeschaltet wird und bei unveränderten Drehzahlverhältnissen die Schritte S1 bis S4 wiederholt werden.

14. Verfahren nach einem der Ansprüche 1 bis 13, **dadurch gekennzeichnet, dass** eine Verfahrgeschwindigkeit der Schaltgabel (4) begrenzt wird.

15. Verfahren nach einem der Ansprüche 1 bis 12, **dadurch gekennzeichnet, dass** die Werte für die Zeitdauern (Δt₁ bis Δt₇), die Drehzahländerungen, weitere Drehzahlkennzahlen sowie die Werte für die Betätigungskräfte (F₁ bis F₇) in Abhängigkeit von der Temperatur und den vermutlich eingelegten Gang (G1, G2) vorgegeben werden.

## Claims

1. Method for attaining a neutral position (N), located between two positions of a shift fork (4) in a gearbox of a motor vehicle from a home position of the shift fork (4),
wherein the shift fork (4) can be moved between the two end positions in two directions (L, R), wherein a gearspeed (G1, G2) can be inserted in an end position in each case,
wherein, in order to engage the gearspeeds (G1, G2) at a synchronization point (Syn1, Syn2) which is assigned to the respective gearspeed, the rotational speed (n_{E}) of an input shaft of the gearbox can be synchronized with the rotational speed (n_{E}) of an output shaft, and
wherein a latching force (F_{R}) acts on the shift fork (4), which presses the shift fork (4) in the direction of the neutral position (N), and in the home position which is further away from the neutral position (N) presses the shift fork (4) away from the neutral position (N) and preferably assumes a maximum value (F_{R},ₘₐₓ) in the vicinity of the neutral position (N),
having the following steps:
S1 application of an activation force (F₁) to the
shift fork (4) in the direction of one of the directions (L, R), wherein the activation force (F₁) is greater than the maximum latching force (F_{R,max});
S2 ending of the step S1 on the basis of at least one of the following abort criteria:
a) a specific time period (Δt₁) is exceeded;
b) a severe change in the ratio between the rotational speed (n_{E}) of the input shaft with respect to the rotational speed (n_{A}) of the output shaft occurs in the step S1;
c) the input shaft and the output shaft no longer run synchronously.

2. Method according to Claim 1, **characterized in that** the method starts from an engaged gearspeed (G1) and comprises before the step which follows step S1:
S0 opening of a clutch of the motor vehicle, as a
result of which the gearbox or a gearbox branch to which the engaged gearspeed (G1) is assigned is disconnected from a drive of the motor vehicle, and wherein it is defined that the activation force (F₁) acts in the direction of the neutral position (N).

3. Method according to Claim 2, **characterized in that** only the abort criterion a) is taken into account in step S2.

4. Method according to Claim 3, **characterized in that** after step S2 an activation force (F₂) which is smaller than the maximum latching force (F_{R},ₘₐₓ) is applied to the shift fork (4) in the same direction for a time period (Δt₂).

5. Method according to Claim 3, **characterized in that** after step S2 an activation force (F₃) which is smaller than the activation force (F₁) and larger than the maximum latching force (F_{R},ₘₐₓ) is applied to the shift fork (4) in the same direction for a time period (Δt₃), wherein the time period (Δt₃) is shorter than a time which is required to synchronize the rotational speeds (n_{E}, n_{A}) of the input shaft and the output shaft.

6. Method according to Claim 2, **characterized in that** in step S2 only the abort criterion b) is taken into account.

7. Method according to Claim 6, **characterized in that** after step S2 an activation force (F₄) which is smaller than the maximum latching force (F_{R,max}) is applied to the shift fork (4) in the opposite direction for a certain time period (Δt₄).

8. Method according to Claim 7, **characterized in that** after step S2 an activation force (F₅) which is smaller than the activation force (F₁) and larger than the maximum latching force (F_{R,max}) is applied to the shift fork (4) in the opposite direction for a time period (Δt₅), wherein the application of the activation force (F₅) ends after a time period (Δt₅) which is shorter than the time required to synchronize the rotational speeds (n_{E}, n_{A}) of the input shaft and output shaft.

9. Method according to Claim 2, **characterized in that** in step S2 only the abort criterion c) is taken into account, and **in that** after step S2 an activation force (F₆) is applied to the shift fork (4) in the same direction for a time period (Δt₆), wherein the activation force (F₆) is smaller than the maximum latching force (F_{R},ₘₐₓ).

10. Method according to Claim 9, **characterized in that** after the expiry of the time period (Δt₆) for the activation force (F₆) at least one reversal of direction takes place, wherein after the reversal of direction has occurred the activation force (F₆) also acts for just a time period (Δt₆).

11. Method according to Claim 1, **characterized in that** all three abort criteria are checked, and different method steps are initiated as a function of the criterion which is satisfied.

12. Method according to Claim 11, **characterized in that** before the step S1 the following step occurs:
S0' identification whether a gearspeed (G1, G2) is engaged, wherein in the case of successful identification the activation force (F₁) acts in the direction of the neutral position (N), and in the case of unsuccessful identification the activation force (F₁) acts in the direction of a relatively high gearspeed, and wherein the clutch of the motor vehicle is opened, as a result of which the gearbox or a gearbox branch to which the identified gearspeed or relatively high gearspeed is assigned is disconnected from the drive.

13. Method according to Claim 12, **characterized in that** step S2 is followed by the following steps:
S3 when the abort criterion b) arises the activation force (F₁) is switched off, and **in that** when the abort criterion a) or c) arises an activation force (F₇) which is smaller than the activation force (F₁) is applied to the shift fork (4) in the same direction, wherein the application of the activation force (F₇) is switched off or ends after a time period (Δt₇) if a severe change in the rotational speed (n_{E}) of the input shaft occurs;
S4 in the case of a severe change in the rotational speed (n_{E}) of the input shaft the activation force (F₇) is switched off, and in the case of unchanged rotational speed ratios the steps S1 to S4 are repeated.

14. Method according to one of Claims 1 to 13, **characterized in that** a speed of movement of the shift fork (4) is limited.

15. Method according to one of Claims 1 to 12, **characterized in that** the values for the time periods (Δt₁ to Δt₇), the changes in rotational speed, further characteristic numbers and the values for the activation forces (F₁ to F₇) are predefined as a function of the temperature and the gearspeed (G1, G2) which is assumed to be engaged.

## Revendications

1. Procédé pour atteindre une position neutre (N) située entre deux positions de fin de course d'une fourchette de commande (4) dans une boîte de vitesses d'un véhicule automobile, à partir d'une position de départ de la fourchette de commande (4),
- la fourchette de commande (4) pouvant être déplacée entre les deux positions de fin de course dans deux directions (L, R),
- dans chaque position de fin de course, une vitesse (G1, G2) pouvant être enclenchée,
- pour l'enclenchement des vitesses (G1, G2) dans un point de synchronisation (Syn1, Syn2) associé à la vitesse respective, le régime (n_{E}) d'un arbre d'entrée de la boîte de vitesses pouvant être synchronisé avec le régime (n_{A}) d'un arbre de sortie, et
- une force d'encliquetage (F_{R}) agissant sur la fourchette de commande (4), laquelle force presse la fourchette de commande (4) dans la direction de la position neutre (N) et repousse la fourchette de commande (4) de la position neutre (N) dans la position de départ plus éloignée de la position neutre (N), et adopte de préférence à proximité de la position neutre (N) un maximum (F_{R,max}) ,
comprenant les étapes suivante
S1 sollicitation de la fourchette de commande (4) par une force de commande (F₁) dans la direction de l'une des directions (L, R), la force de commande (F₁) étant supérieure à la force d'encliquetage maximale (F_{R,max}) ;
S2 achèvement de l'étape S1 à l'aide d'au moins l'un des critères d'interruption suivantes :
a) une durée déterminée (Δt₁) est dépassée ;
b) il s'établit à l'étape S1 une forte variation du rapport de régime (n_{E}) de l'arbre d'entrée au régime (n_{A}) de l'arbre de sortie ;
c) l'arbre d'entrée et l'arbre de sortie ne tournent plus de manière synchrone.

2. Procédé selon la revendication 1, **caractérisé en ce que** le procédé démarre à partir d'une vitesse (G1) enclenchée et comprend, avant l'étape S1, l'étape suivants :
S0 Ouverture d'un embrayage du véhicule automobile, de sorte que la boîte de vitesses, ou une ramification de la boîte de vitesses à laquelle est associée la vitesse (G1) enclenchée soit séparée d'un entraînement du véhicule automobile, la force de commande (F₁) agissant dans ce cas dans la direction de la position neutre (N).

3. Procédé selon la revendication 2, **caractérisé en ce que** dans l'étape S2, seulement le critère d'interruption a) est considéré.

4. Procédé selon la revendication 3, **caractérisé en ce qu'**après l'étape S2, la fourchette de commande (4) est sollicitée dans la même direction pendant une durée (Δt₂) avec une force de commande (F₂) qui est inférieure à la force d'encliquetage maximale (F_{R,max}) .

5. Procédé selon la revendication 3, **caractérisé en ce qu'**après l'étape S2, la fourchette de commande (4) est sollicitée dans la même direction pendant une durée (Δt₃) avec une force de commande (F₃) qui est inférieure à la force de commande (F₁) et supérieure à la force d'encliquetage maximale (F_{R,max}), la durée (Δt₃) étant inférieure à un temps qui est nécessaire pour la synchronisation des régimes (n_{E}, n_{A}) de l'arbre d'entrée et de l'arbre de sortie.

6. Procédé selon la revendication 2, **caractérisé en ce que** dans l'étape S₂, on ne tient compte que du critère d'interruption b).

7. Procédé selon la revendication 6, **caractérisé en ce qu'**après l'étape S₂, la fourchette de commande (4) est sollicitée dans la direction opposée pendant une certaine durée (Δt₄) avec une force de commande (F₄) qui est inférieure à la force d'encliquetage maximale (F_{R,max}).

8. Procédé selon la revendication 7, **caractérisé en ce qu'**après l'étape S2, la fourchette de commande (4) est sollicitée dans la direction opposée pendant un intervalle de temps (Δt₅) avec une force de commande (F₅) qui est inférieure à la force de commande (F₁) et supérieure à la force d'encliquetage maximale (F_{R,max}) , la sollicitation par la force de commande (F₅) se terminant après une durée (Δt₅) qui est inférieure au temps nécessaire pour la synchronisation des régimes (n_{E}, n_{A}) de l'arbre d'entrée et de l'arbre de sortie.

9. Procédé selon la revendication 2, **caractérisé en ce que** dans l'étape S2, seulement le critère d'interruption c) est pris en compte, et **en ce qu'**après l'étape S2, la fourchette de commande (4) est sollicitée dans la même direction avec une force de commande (F₆) pendant une durée (Δt₆) , la force de commande (F₆) étant inférieure à la force d'encliquetage maximale (F_{R,max}) .

10. Procédé selon la revendication 9, **caractérisé en ce qu'**après l'écoulement de la durée (Δₜ₆) il se produit pour la force de commande (F₆) au moins une inversion de direction, et après l'inversion de la direction, la force de commande (F₆) n'agit que pendant une durée (Δt₆).

11. Procédé selon la revendication 1, **caractérisé en ce que** les trois critères d'interruption sont vérifiés, et en fonction du critère qui est satisfait, différentes étapes de procédé sont introduites.

12. Procédé selon la revendication 11, **caractérisé en ce qu'**avant l'étape S1, on effectue l'étape suivants :
S0' Identification de l'enclenchement ou non d'une vitesse (G1, G2), et en cas d'identification positive, la force de commande (F₁) agit dans la direction de la position neutre (N), et en cas de non identification, la force de commande (F₁) agit dans la direction d'une vitesse supérieure, et l'embrayage du véhicule automobile étant ouvert, de sorte que la boîte de vitesses ou une ramification de la boîte de vitesses à laquelle est associée la vitesse identifiée ou la vitesse supérieure, soit séparée de l'entraînement.

13. Procédé selon la revendication 12, **caractérisé en ce que** l'on effectue après l'étape S2 les étapes suivantes :
S3 à l'entrée du critère d'interruption b), la force de commande (F₁) est supprimée, et **en ce qu'**à l'entrée du critère d'interruption a) ou c), la fourchette de commande (4) est sollicitée dans la même direction avec une force de commande (F₇) , qui est inférieure à la force de commande (F₁), la sollicitation par la force de commande (F₇) étant coupée après un intervalle de temps (Δt₇), ou se terminant lorsqu'il s'établit une forte variation du régime (n_{E}) de l'arbre d'entrée ;
S4 en cas de forte variation du régime (n_{E}) de l'arbre d'entrée, la force de commande (F₇) est coupée et en cas de rapports de régime non modifiés, les étapes S1 à S4 sont répétées.

14. Procédé selon l'une quelconque des revendications 1 à 13, **caractérisé en ce qu'**une vitesse de déplacement de la fourchette de commande (4) est limitée.

15. Procédé selon l'une quelconque des revendications 1 à 12, **caractérisé en ce que** les valeurs pour les durées (Δt₁ à Δt₇), les variations de régime, d'autres caractéristiques du régime ainsi que les valeurs pour les forces de commande (F₁ à F₇) sont prédéfinies en fonction de la température et de la vitesse enclenchée présumée (G1, G2).
